# EUROPÄISCHE PATENTSCHRIFT

(11) **EP 0 705 181 B1**
(45) Veröffentlichungstag und Bekanntmachung des Hinweises auf die Patenterteilung: **19.08.1998**
(21) Anmeldenummer: 94922852.2
(22) Anmeldetag: 20.06.1994
(51) Int. Cl.: B60R 7/08, B60N 2/46, B60N 3/00

(54) **VORRICHTUNG, INSBESONDERE ZUR AUFNAHME EINES NOTIZBLOCKS, ZUM EINBAU IN KRAFTFAHRZEUGE**
DEVICE FOR FITTING IN A MOTOR VEHICLE, ESPECIALLY TO HOLD A NOTEPAD
DISPOSITIF, DESTINE NOTAMMENT A RECEVOIR UN BLOC-NOTES, A MONTER DANS UN VEHICULE AUTOMOBILE

(30) Priorität: 21.06.1993 CH 1835/93
(43) Veröffentlichungstag der Anmeldung: 10.04.1996
(73) Patentinhaber: fischerwerke Artur Fischer GmbH & Co. KG, D-72178 Waldachtal (DE)
(72) Erfinder: ACKERET, Peter, CH-8700 Küsnacht (CH)
(86) Internationale Anmeldenummer: EP9402004
(87) Internationale Veröffentlichungsnummer: WO9500360

(56) Entgegenhaltungen:
- WO-A-83/03392
- US-A- 2 522 602
- US-A- 4 417 764
- US-A- 4 852 940

## Beschreibung

Oft besteht das Bedürfnis, in Kraftfahrzeugen (Kfz) Notizen zu schreiben.

Bei Fahrbereitschaft, beispielsweise im Kolonnenverkehr oder vor einer Ampel, oder auch beim Telefonieren im Kfz , wo besonders oft etwas notiert werden muss, steht dafür vielmal lediglich eine Hand zur Verfügung, sodass es notwendig ist, dass das Notizpapier im Kfz festgehalten ist.

Im Kfz steht selten eine flache, genügend grosse, auch nachts beleuchtete und ergonomisch richtig plazierte Schreibunterlage zur Verfügung, zu deren Benützung die Hand bequem abgestützt werden kann.

Auch müssen Notizpapier und Schreibgeräte, wenn sie rasch gebraucht werden, oft mühsam im Handschuhfach oder in Ablagen gesucht werden, was, wie das Schreiben von Notizen auf ungeeigneten bzw. ungünstig plazierten Flächen, auch gefährlich sein kann, da die Aufmerksamkeit des Fahrers dadurch von der Fahrbahn abgelenkt wird.

Beschriftete Notizblätter können im Kfz, verursacht durch Luftzug, Vibrationen und Beschleunigungen an Orte gelangen, wo sie vergessen oder verloren gehen.

Notizpapier kann auch durch Sonneneinstrahlung oder Berührung mit anderen Aufbewahrungsgegenständen, mit welchen zusammen sie in Ablagen untergebracht sind, verschmutzt und beschädigt werden.

Ferner ist es oft wünschenswert, daß Notizen nicht offen von Mitfahrern und Passanten einsehbar im Auto umherliegen.

Aus der US-PS 4,417,764 ist eine Schreibunterlage bekannt, die in einer horizontalen Ebene aus einer Armlehne heraus verschiebbar in der Armlehne geführt ist. Die bekannte Schreibunterlage hat jedoch den Nachteil, daß sie sich unterhalb einer Oberseite der Armlehne befindet, es besteht also eine Stufe zwischen der Oberseite der Armlehne und der herausgeschobenen Schreibunterlage. Dies ist ergonomisch sehr ungünstig, weil die Armlehne das Schreiben behindert; die Oberseite der Armlehne kann nicht als Handballenauflage beim Schreiben verwendet werden. Eine Handballenauflage zum Schreiben sollte sich in etwa auf gleicher Höhe wie die Schreibunterlage befinden, keinesfalls jedoch höher als diese, da sich mit einer Hand, die sich mit Abstand über einer Schreibunterlage aufstützt nur schlecht schreiben läßt. Schreiben ohne abstützende Hand ist ebenfalls schwierig und dürfte insbesondere in einem Fahrzeug, in dem Vibrationen und Fahrbewegungen auftreten, kaum zu-einer lesbaren Schritt führen.

Es ist daher Aufgabe der Erfindung, eine Vorrichtung, insbesondere zur Aufnahme eines Notizblocks zum Einbau in ein Kraftfahrzeug zu schaffen, die in ihrer äußeren Raststellung ergonomisch günstig zum Schreiben angeordnet ist.

Diese Aufgabe wird erfindungsgemaß durch die Merkmale des Anspruchs 1 gelöst. Die erfindungsgemäße Vorrichtung weist einen Schieber auf, der in einem Aufnahmegehäuse längs verschieblich gelagert ist. Das Aufnahmegehäuse ist zum Einbau beispielsweise in eine Mittelarmlehne eines Kraftwagens vorgesehen, so daß sie nach vorn aus der Mittelarmlehne heraus verschiebbar ist. Auf dem Schieber ist die Trägerplatte, welche beispielsweise als Schreibunterlage dienen kann, mit Schwenkarmen nach oben anhebbar geführt angebracht. Von der Seite gesehen bilden die Schwenkarme zusammen mit der Trägerplatte und dem Schieber ein Viereck nach Art einer Parallelogrammführung. Der Schlitten kann nach vorn aus der Mittelarmlehne heraus in eine äußere Endlage verschoben und die Tragplatte in die äußere Raststellung angehoben werden, in der sie sich in Höhe einer Oberseite der Mittelarmlehne befindet. Die Trägerplatte schließt sich nach vorn an die Oberseite der Mittelarmlehne od. dgl. ohne nennenswerte Stufe und allenfalls mit keinem Zwischenraum an, verlängert also die Oberseite der Mittelarmlehne nach vorn. Zum Schreiben auf der Trägerplatte kann die Schreibhand auf die Oberseite der Mittelarmlehne aufgelegt werden, so daß bequemes Schreiben möglich ist.

Die Öffnung des Aufnahmegehäuses ist vorzugsweise in der (in Fahrtrichtung gesehen) vorderen Stirnseite der als Einbaukörper vorgesehenen Mittelarmlehne od. dgl. vorgesehen, so daß die Oberseite des Einbaukörpers auch bei ausgefahrener Trägerplatte eine geschlossene Auflagefläche für den Arm des Benützers bildet.

Die Schwenkarme können eine Parallelogrammführung der Trägerplatte am Schlitten bilden. Vorzugsweise werden die vom Einbaukörper weiter entfernten (vorderen) Schwenkarme länger ausgebildet als die dem Einbaukörper näheren (hinteren) Schwenkarme. Dadurch nimmt die Trägerplatte in ihrer äußeren Raststellung eine geneigte Lage ein, sie erhebt sich vom Einbaukörper weg, was ergonomisch günstig für die Verwendung der Trägerplatte als Schreibunterlage ist.

Die Trägerplatte wird dabei erst angehoben, wenn der Schlitten seine äussere Endlage erreicht hat. Dies ermöglicht eine besonder geringe Bauhöhe des Aufnahmegehäuses.

Das Anheben der Trägerplatte kann durch Federkraft erfolgen, wobei dann vorzugsweise Mittel vorzusehen sind, welche die Hubbewegung erst dann freigeben, wenn die Trägerplatte vollständig aus dem Aufnahmegehäuse ausgefahren ist.

Dies könnte mittels einer Verriegelung der Trägerplatte am Schlitten erfolgen, welche manuell oder durch die Relativbewegung zwischen Schlitten und Aufnahmegehäuse aktiviert bzw. inaktiviert wird.

Im weiteren sollte die Einschubbewegung des Schlittens blockiert bleiben, bis die Trägerplatte soweit abgesenkt ist, dass eine Kollision mit den Aufnahmegehäuse beim Einschieben des Schlittens ausgeschlossen ist.

Dies könnte mittels einer am Schlitten bzw. auf Aufnahmegehäuse angeordneten Einschubsperre erfolgen, welche durch die Relativbewegung zwischen Trägerplatte und Schlitten aktiviert bzw. inaktiviert wird.

Eine bevorzugte Ausführungsform ergibt sich durch die Verwendung einer Zwangssteuerung, welche beispielsweise über eine Steuerkurve die vertikale Bewegung der Trägerplatte in Abhängigkeit von der horizontalen Bewegung des Schlittens steuert.

Bei einer solchen Ausführungsform wäre es denkbar, auch das Anheben der Trägerplatte über eine solche Zwangssteuerung zu aktivieren, sodass auch auf die Verwendung von Hubfedern verzichtet werden könnte.

Die Trägerplatte wird in der äusseren Raststellung vonrzugsweise manuell lösbar blockiert, sodass sie bei vertikaler Belastung nicht einknicken kann.

Die Einraststellung ist dabei so zu wählen, dass die Trägerplatte in einer Ebene liegt, welche im wesentlichen mit der Oberseite des Einbaukörpers fluchtet.

Es wäre auch möglich, die Einraststellung, beispielsweise über eine Verstellschraube, variabel zu wählen, sodass die Vorrichtung ohne bauliche Massnahmen zum Einbau in verschiedene Einbaukörper verwendbar wäre bzw. vom Benützer an seine Bedürfnisse optimal angepasst werden könnte.

Die Vorrichtung ist besonder geeignet zur Verwendung als Schreibunterlage. Die Trägerplatte dient dabei vorzugsweise als Halterung für einen Notizblock, welcher mit bequem abgestützer Schreibhand benützt werden kann.

Dazu sind die Schwenkarme vorzugsweise so anzuordnen, dass sich die Trägerplatte beim Anheben gegen das Aufnahmegehäuse hin bewegt, sodass der Abstand zwischen dem Einbaukörper und der Trägerplatte in ihrer äusseren Raststellung möglichst gering ist.

Durch die Verwendung unterschiedlich langer Schwenkarme wäre es zudem möglich, die Trägerplatte in der äusseren Raststellung in eine, für ihre Benützung möglichst optimale Stellung in bezug auf die Oberseite des Einbaukörpers zu neigen.

Der Notizblock ist vorzugsweise mit einer Klammer an der Trägerplatte festgehalten.

Diese Klammer könnte so ausgebildet sein, dass sie von einer aktiven Stellung, in welcher der Notizblock an seiner vorderen Kante festgehalten wird, in eine inaktive Stellung aus dem Bereich des Notizblocks weggeschwenkt werden könnte, was beispielsweise die Verwendung von sog. "Post-It"-Haftnotizen, welche sowohl auf der Trägerplatte wie auch untereinander haften, erleichtern würde.

Zur seitlichen Zentrierung solcher "Post-it"-Haftnotizen könnten auf der Trägerplatte seitliche Abstützwände vorgesehen werden, wobei diese so auszubilden wären, dass der Block lediglich im Bereich seiner Vorderkante erfasst würde, sodass das Schreiben auch bei wenigen Notizblättern nicht durch diese Abstützwände behindert werden könnte.

An der hinteren Endkante der Trägerplatte könnte ein Kantenschutz angeordnet sein, der sich beim Einschub des Schlittens über die hintere Kante des Notizblocks legt und diese so vor möglichen Beschädigungen schützt.

An der Trägerplatte ist vorzugsweise vor dem Notizblock eine Halterung für ein Schreibgerät angeordnet.

Auch könnte der Notizblock zusätzlich mit einem an der Trägerplatte angeordneten Schieb- oder Klappdeckel abgedeckt werden.

Unter dem Notizblock könnte ferner eine Schublade bzw. ein Schieber mit Informationen wie Kalender, Telefonregister etc. untergebracht werden, welche in der äusseren Raststellung über die Oberseite des Einbaukörpers nach hinten aus der Trägerplatte herausziehbar wären.

Schliesslich wäre es auch möglich, die Schreibfläche in der äusseren Raststellung durch eine, vorzugsweise vor dem Notizblock an der Trägerplatte angeordneten Lichtquelle zu beleuchten.

Die Oeffnung am Aufnahmegehäuse wird bei eingeschobenem Schlitten vorzugsweise durch eine, am vorderen Ende des Schlittens bzw. der Trägerplatte angeordnete Abdeckung verschlossen.

Die Ausschubbewegung des Schlittens aus dem Aufnahmegehäuse kann durch Federkraft erfolgen, wobei dann der Schlitten mittels einer, vorzugsweise im Bereich der Abdeckung manuell auslösbaren Verriegelung im Aufnahmgehäuse festgehalten werden müsste.

Die erfindungsgemässe Vorrichtung ermöglicht die Verwendung eines Notizblocks in einem Kfz mit folgenden Vorteilen:
- Bei Nichtgebrauch ist der Notizblock und das zugehörige Schreibgerät geschützt vor Beschädigungen, Verunreinigungen und Sonneneinstrahlungen im Kfz aufbewahrt.
- Bei Bedarf wird der Notizblock zusammen mit dem Schreibgerät sekundenschnell in optimaler Gebrauchslage im Kfz präsentiert.
- Der Notizblock wird auf einer stabilen Schreibunterlage festgehalten und ist mit bequemer Handauflage einhändig beschriftbar.
- Der Notizblock kann auch bei Dunkelheit verwendet werden.
- Nach Gebrauch lässt sich der Notizblock mit dem zugehörigen Schreibgerät ebenso schnell wieder versorgen. Die Notizen können dabei nicht verloren gehen und sind, vor der Einsicht Dritter geschützt, aufbewahrt.
- Die Vorrichtung ist in einem Hohlraum im Kfz untergebracht und beansprucht keinen Platz im Bereich der Bedienungsflächen von Armaturenbrett und Mittelkonsole.

Es versteht sich, dass die erfindungsgemässe Vorrichtung auch für andere oder zusätzliche Anwendungen anpass- bzw. erweiterbar wäre.

So könnte beispielsweise an der Trägerplatte eine Halterung für ein Mobiltelefon angeordnet werden, welches (zusammen mit den Notziblock) von einer, vor Beschädigungen und Diebstahl geschützten Aufbewahrungsposition im Nu in eine bequeme Gebrauchslage gebracht werden könnte.

In der nachfolgenden Beschreibung wird eine Kombination der erfindungsgemässen Vorrichtung mit einer Armlehne beschrieben, ohne dass die Erfindung auf diese Bauweise beschränkt wäre. Vielmehr lässt sich die Vorrichtung, gemäss vorliegender Erfindung, ebenso gut in weiteren geeigneten Einbaukörpern wie beispielsweise Mittelkonsolen unterbringen. Auch ist die Anwendung der Vorrichtung nicht auf Kfz beschränkt.

Weitere Merkmale und Vorteile der Erfindung ergeben sich aus den Unteransprüchen bzw. der Beschreibung von Ausführungsbeispielen der Erfindung, welche nachstehend unter Bezugnahme auf die beigefügten Zeichnungen erläutert werden.
- Fig. 1: zeigt im Längsschnitt eine erste Ausführungsform der Vorrichtung in der inneren Raststellung.
- Fig. 2: zeigt im Längsschnitt die Vorrichtung gemäss Ausführungsform von Fig. 1 mit ausgefahrenem Schlitten und der Trägerplatte in der unteren Endlage.
- Fig. 3: zeigt im Längsschnitt die Vorrichtung, gemäss Ausführungsform von Fig. 1 und 2 in der äusseren Raststellung.
- Fig. 4: zeigt eine Detailansicht der Mechanik zur Verriegelung der Trägerplatte in der äusseren Raststellung gemäss Ausführungsform von Fig. 1 bis 3.
- Fig. 5: zeigt im Längsschnitt eine zweite Ausführungsform der Vorrichtung in der inneren Raststellung.
- Fig. 6: zeigt im Längsschnitt die Vorrichtung gem. Ausführungsform von Fig. 5 in der äusseren Raststellung.
- Fig. 7: zeigt im Längsschnitt die Vorrichtung gem. Ausführungsform von Fig. 5 und 6 in einer Zwischenstellung.
- Fig. 8: zeigt einen Querschnitt im Bereich der Halterung mit eingelegtem Schreibgerät durch die Vorrichtung gem. Ausführungsform von Fig. 5 bis 7 in der äusseren Raststellung.
- Fig. 9: zeigt in perspektivischer Ansicht die Vorrichtung gemäss Fig. 5 bis 8 in der äusseren Raststellung.

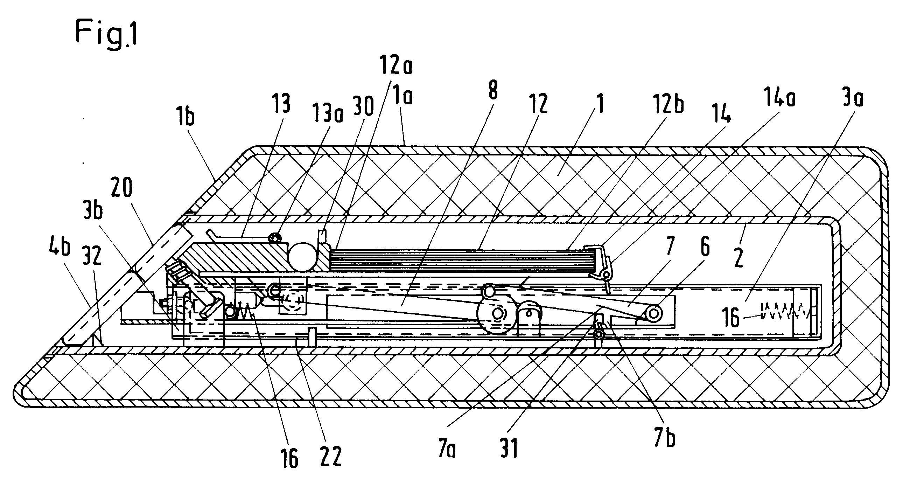

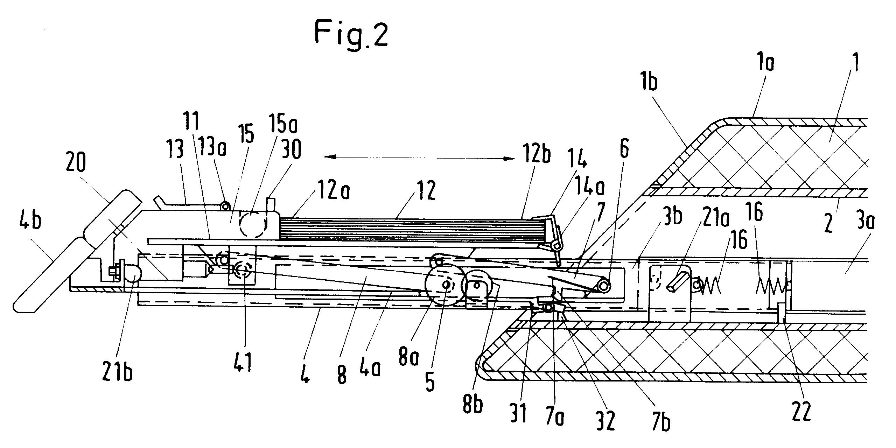

In den Figuren 1 bis 4 wird eine erste Ausführungsform der Vorrichtung dargestellt.

In der Armlehne 1 ist das Aufnahmegehäuse 2 angeordnet, in welchem über die Doppelauszugführungen 3a, 3b der Schlitten 4 längsverschieblich geführt ist.

Zwischen dem Aufnahmegehäuse 2 und dem Schlitten 4 ist eine Feder 16 angeordnet, welche beim Lösen der Verriegelung 21a, 21b mittels der an der Abdeckung 4b angeordneten Taste 20 den Schlitten 4 freigibt, wobei der Ausfahrweg durch einen am Aufnahmegehäuse 2 angeordneten Anschlag 22 begrenzt wird.

Der Schlitten 4 enthält einen Boden 4a, eine Abdeckung 4b sowie Seitenwände 4c, an denen über die Gelenke 6 ein hinteres Paar und über die Gelenke 5 ein vorderes Paar von Schwenkarmen 7, 8 drehbar angelenkt sind.

Ueber die Gelenke 9 und 10 ist die Trägerplatte 11 mit den vier Schwenkarmen 7,8 beweglich verbunden.

Das vordere Paar der Schwenkarme 8 ist länger als das hintere Paar der Schwenkarme 7. Dadurch neigt sich die Trägerplatte 11, welche parallel zum Boden 4a auf den Schlitten 4 liegt, beim Hochklappen in die äussere Raststellung in eine von der Oberseite 1a der Armlehne 1 nach vorne ansteigende Schräglage.

Die Trägerplatte 11 ist mit der Klinke 31 über den am Schwenkarm 7 angeordneten Haken 7b im Schlitten 4 gegen die Kraft der Feder 7a festgehalten.

Wenn der Schlitten 4 seine äussere Position erreicht, läuft die Klinke 31 auf den im Aufnahmegehäuse 2 angeordneten Anschlag 32, welcher die Klinke 31 auslöst, so dass der Haken 7b freigegeben wird und die Trägerplatte 11 unter Einwirkung der Kraft der Feder 7a in die äussere Raststellung bewegt - und dort durch Bolzen 41, welche hinter dem vorderen Paar der Schwenkarme 8 einrasten, blockiert wird.

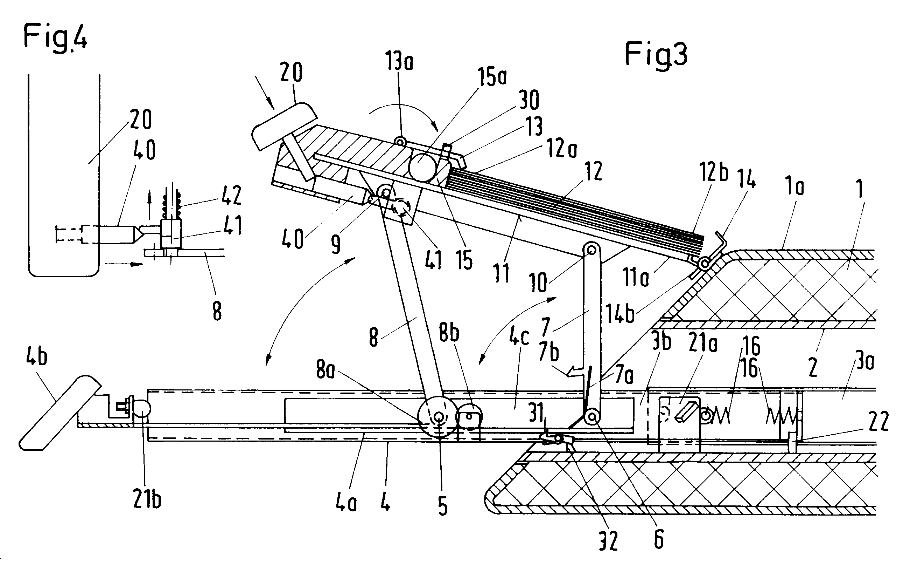

Wie in Fig. 4 dargestellt, werden durch Betätigung der Taste 20 über die Stifte 40 die Bolzen 41 gegen die Kraft der Feder 42 nach innen gestossen, so dass die Trägerplatte 11 gegen die Kraft der Feder 7a auf den Schlitten 4 abgesenkt werden kann.

Nachdem der Schlitten soweit eingefahren wurde, dass der Anschlag 32 inaktiv ist, rastet die Klinke 31 im Haken 7b ein.

Die Hubbewegung der Trägerplatte 11 wird über ein Dämpfungselement 8b, in welches ein am vorderen Paar der Schwenkarme 8 angeordneter Zahnkranz 8a eingreift, gebremst.

Auf der Trägerplatte 11 ist der Notizblock 12 mit der Klammer 13 festgehalten, welche um das Gelenk 13a von einer aktiven Stellung, in welcher sie den Notizblock 12 an seiner vorderen Kante 12a festhält, in eine inaktive Stellung aus dem Bereich des Notizblocks 12 weggeschwenkt werden kann, was beispielsweise bei der Verwendung von sog. "Post-it"-Haftnotizen, welche sowohl auf der Trägerplatte 11 wie auch untereinander haften, von Vorteil ist.

An der hinteren Kante 11a der Trägerplatte 11 ist ein Kantenschutz 14 schwenkbar angeordnet, der sich unter Einwirkung der Kraft der Feder 14a über die hintere Kante 12b des Notizblocks 12 legt und diese beim Einschub des Schlittens 4 ins Aufnahmegehäuse 2 vor Beschädigungen schützt.

Beim Hochschwenken der Trägerplatte 11 in die äussere Raststellung läuft die Verlängerung 14b des Kantenschutzes 14 auf die vordere Stirnseite 1b der Armlehne 1 auf, wodurch der Kantenschutz 14 vom Notizblock 12 wegschwenkt wird.

An der Trägerplatte 11 ist vor dem Notizblock 12 eine Halterung 15 angeordnet, in die ein Schreibgerät 15a eingelegt werden kann.

Im weiteren ist vor dem Notizblock 12 eine Beleuchtung 30 an der Trägerplatte 11 angeordnet, welche in der äusseren Raststellung die Schreibfläche beleuchtet. Diese Beleuchtung 30 kann mittels eines Schalters manuell oder durch die Bewegung der Trägerplatte 11 von einer Raststellung in die andere Raststellung automatisch ein- bzw. ausgeschaltet werden.

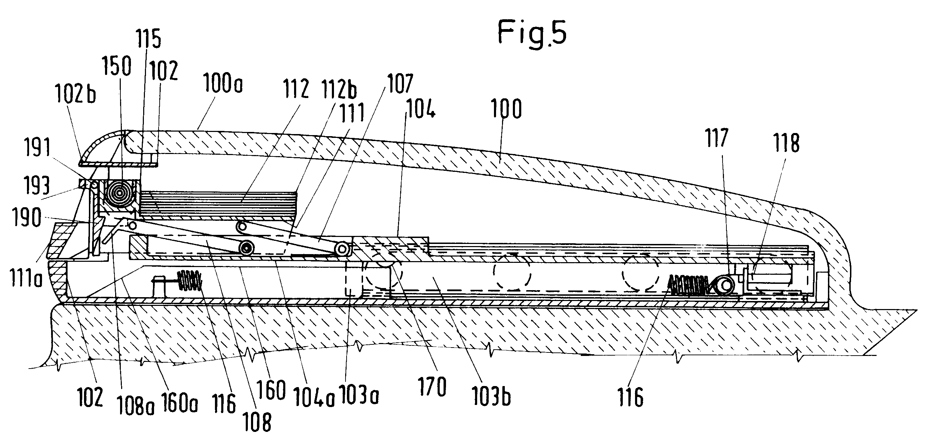

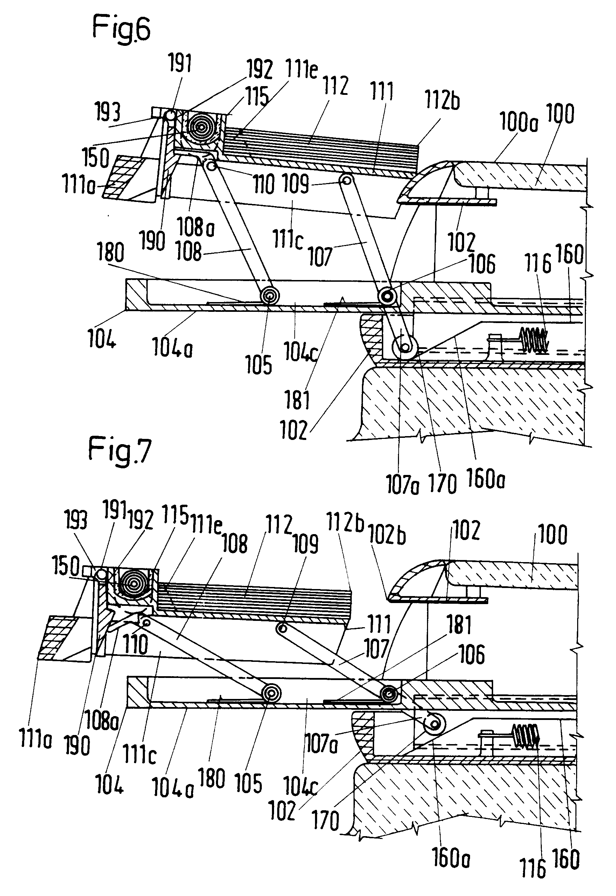

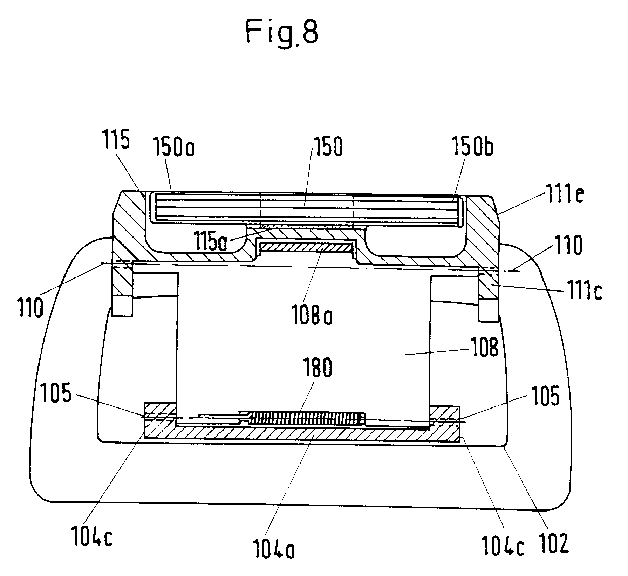

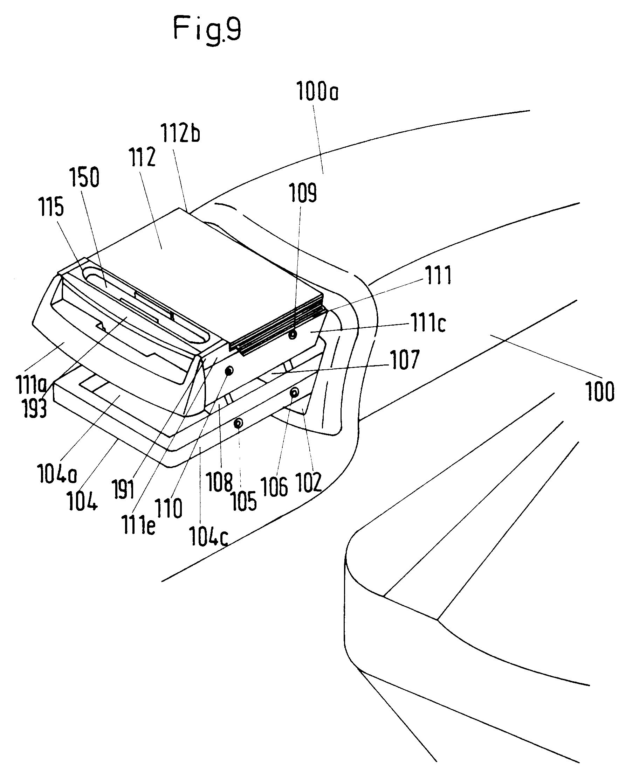

In den Figuren 5-9 wird eine zweite Ausführungsform der Vorrichtung dargestellt.

In der Armlehne 100 ist das Aufnahmegehäuse 102 angeordnet, in welchem über die Doppelauszugführungen 103a, 103b, der Schlitten 104 längsverschieblich gelagert ist.

Zwischen dem Aufnahmegehäuse 102 und dem Schlitten 104 ist eine Zugfeder 116 angeordnet, welche beim Lösen der "Doppelhub"-Verriegelung 117, 118 durch Druck auf die an der Trägerplatte 111 angeordnete Abdeckung 111a, den Schlitten 104 zum Ausschub freigibt.

Der Schlitten 104 enthält einen Boden 104a sowie Seitenwände 104c, an denen über das Gelenk 106 ein hinterer und über das Gelenk 105 ein vorderer Schwenkarm 107, 108 angelenkt sind.

Die Trägerplatte 111 enthält nach unten gerichtete Seitenwände 111c, an welchen über das Gelenk 109 der hintere und über das Gelenk 110 der vordere Schwenkarm 107, 108 angelenkt sind.

Im Bereich der Gelenke 105, 106 sind die Schenkelfedern 180, 181 angeordnet, welche die Schwenkarme 107, 108 nach oben drücken.

Das obere Ende des Schwenkarms 108 ist über das Gelenk 110 hinaus verlängert. An der Verlängerung ist der Fortsatz 108a angeordnet.

Im vorderen Bereich der Trägerplatte 111 ist der Riegel 190 um die Achse 191 drehbar gelagert. Eine Feder 192 drückt den Riegel 190 gegen den Fortsatz 108a.

Beim Anheben der Trägerplatte 111 läuft der Fortsatz 108a auf die Einlaufschräge des Riegels 190 auf und lenkt diesen, gegen die Kraft der Feder 192 nach vorne aus, bis die Trägerplatt 111 die äussere Raststellung erreicht hat und der Riegel 190 unter den Fortsatz 108a einschnappen und damit die Trägerplatte 111 verriegeln kann, sodass diese gegen Druck von oben gesichert ist.

Durch Anheben der am Riegel 190 angebrachten Leiste 193 wird der Riegel 190 gegen die Kraft der Feder 192 nach vorne ausgelenkt, sodass die Trägerplatte 111 gegen die Kraft der Schenkelfedern 180, 181 auf den Schlitten 104 abgesenkt werden kann.

Die obere Endlage der Trägerplatte 111 wird durch die Anschlagfläche 111a bestimmt, auf welche der Fortsatz 108a beim Aufrichten der Trägerplatte 111 aufläuft.

Der Schwenkarm 107 ist an seinem unteren Ende über das Gelenk 106 hinaus verlängert.

An der Verlängerung 107a ist eine Rolle 170 drehbar gelagert.

Im Boden 104a ist eine entsprechende Ausnehmung vorgesehen, sodass die Verlängerung 107a beim Anheben der Trägerplatte 111 nach unten ausschwenken kann.

Im Aufnahmegehäuse 102 ist eine Steuerkurve 160 angeordnet, gegen welche die Rolle 170 gedrückt wird und welche die Stellung des Schwenkarms 107 bestimmt.

Beim Ausschub des Schlittens 104 wird die Trägerplatte 111 so lange nach unten gedrückt, bis die hintere Endkante 112b des Notizblocks 112 die obere Gehäusekante 102b passiert hat.

Sobald die Rolle 170 die Auffahrt 160a erreicht hat, kann sie nach unten wegschwenken, sodass sich die Trägerplatte 111 aufrichten kann.

In der äusseren Raststellung steht die Rolle 170 an der Auffahrt 160a an und verhindert so das Einschieben des Schlittens 104.

Erst wenn die Trägerplatte 111 manuell so weit angesenkt worden ist, dass die Rolle 170 auf der Auffahrt 160a aufliegt, kann der Schlitten 104 ins Aufnahmegehäuse 102 zurückgeschoben werden.

Durch die Auffahrt 160a wird die Rolle 170 dabei nach oben gedrückt und dadurch die Trägerplatte 111 soweit nach unten bewegt, dass die hintere Endkante 112b des Notizblocks 112 die obere Gehäusekante 102b sicher passieren kann.

Im vorderen Bereich sind die beiden Seitenwände 111c über die Trägerplatte 111 hinaus nach oben verlängert.

Diese Verlängerungen 111e bilden die seitliche Zentrierung für den Notizblock 112, sowie die Seitenwände für die, vor dem Notizblock 112 an der Trägerplatte 111 angeordnete Halterung 115, in welche ein Schreibgerät 150 eingelegt werden kann.

Die Halterung 115 ist als U-förmige Wanne ausgebildet.

Im Mittelbereich der Halterung 115 ist eine erhöhte Abstützfläche 115a vorgesehen, auf welcher das Schreibgerät 150 liegt.

Durch Druck auf eines der beiden äusseren Enden 150a, 150b neigt sich das Schreibgerät 150 soweit, dass es am jeweils anderen Ende bequem erfasst und nach oben aus der Halterung 115 entnommen werden kann.

## Patentansprüche

1. Vorrichtung, insbesondere zur Aufnahme eines Notizblocks, zum Einbau in Kraftfahrzeuge, mit einem Aufnahmegehäuse (2, 102) zum Einbau in einen Fahrzeugeinbaukörper (1, 100) wie Armlehne, Mittelkonsole od. dgl. und einer, mit dem Aufnahmegehäuse (2, 102) beweglich verbundenen Trägerplatte (11, 111) welche zwischen einer inneren Raststellung, in welcher die Trägerplatte (11, 111) im wesentlichen im Aufnahmegehäuse (2, 102) untergebracht ist, und einer äußeren Raststellung beweglich ist, **dadurch gekennzeichnet**, daß im Aufnahmegehäuse (2, 102) ein Schlitten (4, 104) längs verschieblich gelagert ist, mit dem die Trägerplatte (11, 111) über Schwenkarme (8, 7, 108, 107) verbunden ist, die quer zur Bewegungsrichtung und von einer Seite des Schlittens (4, 104) gesehen zusammen mit dem Schiffen (4, 104) und der Trägerplatte (11, 111) ein Viereck bilden und mittels derer die Trägerplatte (11, 111) in der äußeren Endlage des Schlittens (4, 104) in die äußere Raststellung anhebbar ist.

2. Vorrichtung nach Anspruch 1, **dadurch gekennzeichnet**, daß die Schwenkarme (8, 7, 108, 107) über Gelenke (5, 6, 105, 106) mit dem Schlitten (4, 104) und über Gelenke (10, 9, 110, 109) mit der Trägerplatte (11, 111) drehbar verbunden sind.

3. Vorrichtung nach Anspruch 2, **dadurch gekennzeichnet**, daß die Gelenke (5, 6, 9, 10, 105, 106, 109, 110) um Achsen quer zur Bewegungsrichtung des Schlittens (4, 104) drehen.

4. Vorrichtung nach Anspruch 1, **dadurch gekennzeichnet**, daß in Ausziehrichtung des Schlittens (4, 104) aus dem Aufnahmegehäuse (2, 102) heraus vordere Schwenkarme (8, 108) länger sind als hintere Schwenkarme (7, 107).

5. Vorrichtung nach Anspruch 1, dadurch gekennzeichnet, dass die Schwenkarme (7, 8, 107, 108) so angeordnet sind, dass die Trägerplatte (11, 111) sich entgegen der Ausschubrichtung des Schlittens (4, 104) nach oben bewegt.

6. Vorrichtung nach Anspruch 1, dadurch gekennzeichnet, dass die Trägerplatte (11, 111) unter Krafteinwirkung von Federn (16, 116, 7a, 180, 181) von der inneren in die äussere Raststellung bewegt wird.

7. Vorrichtung nach Ansprüchen 1 und 6, dadurch gekennzeichnet, dass der Ausschub des Schlittens (4, 104) unter Krafteinwirkung einer Feder (16, 116) erfolgt.

8. Vorrichtung nach Anspruch 7, dadurch gekennzeichnet, dass der Schlitten (4, 104) über eine manuell lösbare Verriegelung (21a, 21b, 117, 118) im Aufnahmegehäuse (2, 102) festgehalten wird.

9. Vorrichtung nach Ansprüchen 1 und 6, dadurch gekennzeichnet, dass sich die Trägerplatte (11, 111) unter Krafteinwirkung von Federn (7a, 180, 181) vom Schlitten (4, 104) wegbewegt.

10. Vorrichtung nach Anspruch 9, dadurch gekennzeichnet, dass Mittel (31, 32, 7b, 107a, 170, 160, 160a, 181) vorgesehen sind, um die Trägerplatte (11, 111) gegen die Kraft der Federn (7a, 180, 181) im Schlitten (4, 104) festzuhalten.

11. Vorrichtung nach Anspruch 10, dadurch gekennzeichnet, dass die Mittel (31, 32, 7b, 107a, 170, 160, 160a, 181) beim Erreichen der äusseren Endlage des Schlittens (4, 104) die Trägerplatte (11, 111) freigegeben werden.

12. Vorrichtung nach Anspruch 1, dadurch gekennzeichnet, dass die Trägerplatte (11, 111) in der äusseren Raststellung mittels einer Verriegelung (41, 42, 108a, 190, 192) arretiert ist.

13. Vorrichtung nach Anspruch 12, dadurch gekennzeichnet, dass die Verriegelung (41, 42, 108a, 190, 192) durch eine an der Trägerplatte (11, 111) angeordnete Auslöseanordnung (20, 40, 193) manuell lösbar ist.

14. Vorrichtung nach Anspruch 1, dadurch gekennzeichnet, dass die Trägerplatte (11, 111) über eine Zwangssteuerung (107, 107a, 170, 181, 160, 160a) in Abhängigkeit von der Bewegung des Schlittens (4, 104) angehoben bzw. abgesenkt wird.

15. Vorrichtung nach Ansprüchen 1 und 14, dadurch gekennzeichnet, dass die Bewegung eines Schwenkarms (107, 107a, 170) über eine Kurve (160, 160a) gesteuert wird.

16. Vorrichtung nach Anspruch 1, dadurch gekennzeichnet, dass Sperrmittel (107a, 170, 160a) vorgesehen sind, welche den Schiffen (4, 104) in seiner äusseren Endlage blockieren und welche durch die Hubbewegung der Trägerplatte (11, 111) aktiviert bzw. inaktiviert werden.

17. Vorrichtung nach Anspruch 1, dadurch gekennzeichnet, dass die Gehäuseöffnung am Aufnahmegehäuse (2, 102) in der inneren Raststellung von einer Abdeckung (4b, 111a) verschlossen wird.

18. Vorrichtung nach Anspruch 17, dadurch gekennzeichnet, dass die Abdeckung (111a) an der Trägerplatte (11, 111) angeordnet ist.

19. Vorrichtung nach Ansprüchen 1 und 17, dadurch gekennzeichnet, dass die Abdeckung (4b) am Schlitten (4, 104) angeordnet ist.

20. Vorrichtung nach Anspruch 1, dadurch gekennzeichnet, dass die Gehäuseöffnung am Aufnahmegehäuse (2, 102) auf der, in Fahrtrichtung des Kfz gesehen, vorderen Stirnseite (1b) des Einbaukörpers (1, 100) angeordnet ist.

21. Vorrichtung nach Anspruch 1, dadurch gekennzeichnet, dass die Trägerplatte (11, 111) in ihrer äusseren Raststellung, in Fahrtrichtung des Kfz gesehen, vor dem Einbaukörper (1, 100) positioniert ist.

22. Vorrichtung nach Anspruch 1, dadurch gekennzeichnet, dass auf der Trägerplatte (11, 111) ein Notizblock (12, 112) angeordnet ist.

23. Vorrichtung nach Anspruch 22, dadurch gekennzeichnet, dass an der Trägerplatte (11, 111) eine Klammer (13) angeordnet ist, mittels welcher der Notizblock (12, 112) festgehalten ist.

24. Vorrichtung nach Anspruch 23, dadurch gekennzeichnet, dass die Klammer (13) eine aktive und eine inaktive Stellung aufweist.

25. Vorrichtung nach Anspruch 22, dadurch gekennzeichnet, dass an der Trägerplatte (11, 111) Zentriermittel (111e) zur seitlichen Begrenzung des Notizblocks (12, 112) angeordnet sind.

26. Vorrichtung nach Anspruch 22, dadurch gekennzeichnet, dass ein Kantenschutz (14) vorgesehen ist, welcher die hintere Kante (12b, 112b) des Notizblocks (12, 112) vor Beschädigungen schützt.

27. Vorrichtung nach Anspruch 26, dadurch gekennzeichnet, dass der Kantenschutz (14) in der äusseren Raststellung inaktiviert ist.

28. Vorrichtung nach Anspruch 1, dadurch gekennzeichnet, dass an der Trägerplatte (11, 111) eine Halterung (15, 115) für ein Schreibgerät (15a, 150) angeordnet ist.

29. Vorrichtung nach Ansprüchen 22 und 28, dadurch gekennzeichnet, dass die Halterung (15, 115) vor dem Notizblock (12, 112) angeordnet ist.

30. Vorrichtung nach Anspruch 28, dadurch gekennzeichnet, dass die Halterung (15, 115) als U-förmige Wanne ausgebildet ist.

31. Vorrichtung nach Anspruch 30, dadurch gekennzeichnet, dass im Mittelbereich der Halterung (15, 115) eine erhöhte Abstützfläche (115a) vorgesehen ist, auf welcher das Schreibgerät (15a, 150) liegt.

32. Vorrichtung nach Anspruch 1, dadurch gekennzeichnet, dass an der Trägerplatte (11, 111) eine Beleuchtung (30) angeordnet ist, welche ihre Oberfläche beleuchtet.

33. Vorrichtung nach Anspruch 1, dadurch gekennzeichnet, dass die äussere Raststellung der Trägerplatte (11, 111) durch einen Anschlag (108a, 111a) definiert wird.

34. Vorrichtung nach Anspruch 33, dadurch gekennzeichnet, dass der Anschlag (108a, 111a) erstellbar ist.

## Claims

1. Arrangement, especially for receiving a notepad, for installation in motor vehicles, having a receiving housing (2, 102) for installation in a built-in body (1, 100) in a vehicle, such as an armrest, central console or the like, and a carrier plate (11, 111) that is movably connected to the receiving housing (2, 102), which carrier plate is movable between an inner locking position, in which the carrier plate (11, 111) is accommodated substantially in the receiving housing (2, 102), and an outer locking position, characterised in that there is mounted so as to be displaceable longitudinally in the receiving housing (2, 102) a carriage (4, 104) to which the carrier plate (11, 111) is connected by way of pivoting arms (8, 7, 108, 107) which, transverse to the direction of movement and viewed from one side of the carriage (4, 104), form a quadrangle together with the carriage (4, 104) and the carrier plate (11, 111) and by means of which pivoting arms the carrier plate (11, 111) in the outer end position of the carriage (4, 104) can be raised to the outer locking position.

2. Arrangement according to claim 1, characterised in that the pivoting arms (8, 7, 108, 107) are connected pivotably to the carriage (4, 104) by way of hinges (5, 6, 105, 106) and to the carrier plate (11, 111) by way of hinges (10, 9, 110, 109).

3. Arrangement according to claim 2, characterised in that the hinges (5, 6, 9, 10, 105, 106, 109, 110) rotate about axes transverse to the direction of movement of the carriage (4, 104).

4. Arrangement according to claim 1, characterised in that front pivoting arms (8, 108) in the direction in which the carriage (4, 104) is pulled out of the receiving housing (2, 102) are longer than rear pivoting arms (7, 107).

5. Arrangement according to claim 1, characterised in that the pivoting arms (7, 8, 107, 108) are so arranged that the carrier plate (11, 111) moves upwards counter to the direction in which the carriage (4, 104) is ejected.

6. Arrangement according to claim 1, characterised in that the carrier plate (11, 111) is moved from the inner to the outer locking position under the influence of the force of springs (16, 116, 7a, 180, 181).

7. Arrangement according to claims 1 and 6, characterised in that the carriage (4, 104) is ejected under the influence of the force of a spring (16, 116).

8. Arrangement according to claim 7, characterised in that the carriage (4, 104) is secured in the receiving housing (2, 102) by way of a manually releasable locking device (21a, 21b, 117, 118).

9. Arrangement according to claims 1 and 6, characterised in that the carrier plate (11, 111) is moved away from the carriage (4, 104) under the influence of the force of springs (7a, 180, 181).

10. Arrangement according to claim 9, characterised in that means (31, 32, 7b, 107a, 170, 160, 160a, 181) are provided in order to secure the carrier plate (11, 111) in the carriage (4, 104) against the force of the springs (7a, 180, 181).

11. Arrangement according to claim 10, characterised in that the means (31, 32, 7b, 107a, 170, 160, 160a, 181) release the carrier plate (11, 111) when the carriage (4, 104) has reached the outer end position.

12. Arrangement according to claim 1, characterised in that the carrier plate (11, 111) is held captive in the outer locking position by means of a locking device (41, 42, 108a, 190, 192).

13. Arrangement according to claim 12, characterised in that the locking device (41, 42, 108a, 190, 192) is manually releasable by a disengaging arrangement (20, 40, 193) that is arranged on the carrier plate (11, 111).

14. Arrangement according to claim 1, characterised in that the carrier plate (11, 111) is raised and lowered by way of a guided control (107, 107a, 170, 181, 160, 160a) in dependence upon the movement of the carriage (4, 104).

15. Arrangement according to claims 1 and 14, characterised in that the movement of one pivoting arm (107, 107a, 170) is controlled by way of a curve (160, 160a).

16. Arrangement according to claim 1, characterised in that stopping means (107a, 170, 160a) are provided which lock the carriage (4, 104) in its outer end position and which are activated and inactivated by the lifting movement of the carrier plate (11, 111).

17. Arrangement according to claim 1, characterised in that the housing opening in the receiving housing (2, 102) is closed in the inner locking position by a cover (4b, 111a).

18. Arrangement according to claim 17, characterised in that the cover (111a) is arranged on the carrier plate (11, 111).

19. Arrangement according to claims 1 and 17, characterised in that the cover (4b) is arranged on the carriage (4, 104).

20. Arrangement according to claim 1, characterised in that the housing opening in the receiving housing (2, 102) is arranged on the front end face (1b) of the built-in body (1, 100), viewed in the direction of travel of the motor vehicle.

21. Arrangement according to claim 1, characterised in that the carrier plate (11, 111) in its outer locking position is positioned in front of the built-in body (1, 100), viewed in the direction of travel of the motor vehicle.

22. Arrangement according to claim 1, characterised in that a notepad (12, 112) is arranged on the carrier plate (11, 111).

23. Arrangement according to claim 22, characterised in that there is arranged on the carrier plate (11, 111) a clamp (13) by means of which the notepad (12, 112) is held securely.

24. Arrangement according to claim 23, characterised in that the clamp (13) has an active and an inactive position.

25. Arrangement according to claim 22, characterised in that there are arranged on the carrier plate (11, 111) centring means (111e) for the lateral bounding of the notepad (12, 112).

26. Arrangement according to claim 22, characterised in that an edge protector (14) is provided which protects the rear edge (12b, 112b) of the notepad (12, 112) against damage.

27. Arrangement according to claim 26, characterised in that the edge protector (14) is inactivated in the outer locking position.

28. Arrangement according to claim 1, characterised in that there is arranged on the carrier plate (11, 111) a holding means (15, 115) for a writing implement (15a, 150).

29. Arrangement according to claims 22 and 28, characterised in that the holding means (15, 115) is arranged in front of the notepad (12, 112).

30. Arrangement according to claim 28, characterised in that the holding means (15, 115) is in the form of a U-shaped trough.

31. Arrangement according to claim 30, characterised in that in the centre region of the holding means (15, 115) there is provided a raised support surface (115a) on which the writing implement (15a, 150) rests.

32. Arrangement according to claim 1, characterised in that there is arranged on the carrier plate (11, 111) illumination (30) which illuminates its surface.

33. Arrangement according to claim 1, characterised in that the outer locking position of the carrier plate (11, 111) is defined by a stop (108a, 111a).

34. Arrangement according to claim 33, characterised in that the stop (108a, 111a) is adjustable.

## Revendications

1. Dispositif à monter dans des véhicules automobiles, notamment destiné à recevoir un bloc-notes et comprenant un boîtier récepteur (2, 102) conçu pour être logé dans un corps structurel intégré (1, 100) de véhicule, tel qu'un accoudoir, une console centrale ou un élément similaire, et une plaque de support (11, 111) qui est reliée au boîtier récepteur (2, 102) avec mobilité, et est mobile entre une position encliquetée intérieure dans laquelle la plaque de support (11, 111) est pour l'essentiel logée dans le boîtier récepteur (2, 102), et une position encliquetée extérieure, caractérisé par le fait qu'un chariot (4, 104) est monté à coulissement longitudinal dans le boîtier récepteur (2, 102), chariot auquel la plaque de support (11, 111) est reliée par l'intermédiaire de bras pivotants (8, 7, 108, 107) qui, observés transversalement par rapport à la direction du mouvement et à partir d'un côté du chariot (4, 104), forment un rectangle en association avec ledit chariot (4, 104) et avec la plaque de support (11, 111), et au moyen desquels ladite plaque de support (11, 111) peut être soulevée jusqu'à la position encliquetée extérieure lorsque le chariot (4, 104) occupe la position extrême extérieure.

2. Dispositif selon la revendication 1, caractérisé par le fait que les bras pivotants (8, 7, 108, 107) sont respectivement reliés au chariot (4, 104) et à la plaque de support (11, 111), de manière rotative, par l'intermédiaire d'articulations (5, 6, 105, 106) et par l'intermédiaire d'articulations (10, 9, 110, 109).

3. Dispositif selon la revendication 2, caractérisé par le fait que les articulations (5, 6, 9, 10, 105, 106, 109, 110) tournent autour d'axes, transversalement par rapport à la direction du mouvement du chariot (4, 104).

4. Dispositif selon la revendication 1, caractérisé par le fait que des bras pivotants antérieurs (8, 108) sont plus longs que des bras pivotants postérieurs (7, 107) dans une direction d'extraction du chariot (4, 104) hors du boîtier récepteur (2, 102).

5. Dispositif selon la revendication 1, caractérisé par le fait que les bras pivotants (7, 8, 107, 108) sont agencés de telle sorte que la plaque de support (11, 111) se déplace, vers le haut, en sens inverse de la direction d'extraction du chariot (4, 104).

6. Dispositif selon la revendication 1, caractérisé par le fait que la plaque de support (11, 111) est déplacée de la position encliquetée intérieure vers la position encliquetée extérieure sous l'action de la force de ressorts (16, 116, 7a, 180, 181).

7. Dispositif selon les revendications 1 et 6, caractérisé par le fait que l'extraction du chariot (4, 104) a lieu sous l'action de la force d'un ressort (16, 116).

8. Dispositif selon la revendication 7, caractérisé par le fait que le chariot (4, 104) est fermement retenu, dans le boîtier récepteur (2, 102), par l'intermédiaire d'un système de verrouillage (21a, 21b, 117, 118) neutralisable manuellement.

9. Dispositif selon les revendications 1 et 6, caractérisé par le fait que la plaque de support (11, 111) se déplace à l'écart du chariot (4, 104) sous l'action de la force de ressorts (7a, 180, 181).

10. Dispositif selon la revendication 9, caractérisé par le fait que des moyens (31, 32, 7b, 107a, 170, 160, 160a, 181) sont prévus pour retenir fermement la plaque de support (11, 111) dans le chariot (4, 104), en s'opposant à la force des ressorts (7a, 180, 181).

11. Dispositif selon la revendication 10, caractérisé par le fait que les moyens (31, 32, 7b, 107a, 170, 160, 160a, 181) libèrent la plaque de support (11, 111) lorsque la position extrême extérieure du chariot (4, 104) est atteinte.

12. Dispositif selon la revendication 1, caractérisé par le fait que la plaque de support (11, 111) est arrêtée dans la position encliquetée extérieure au moyen d'un système de verrouillage (41, 42, 108a, 190, 192).

13. Dispositif selon la revendication 12, caractérisé par le fait que le système de verrouillage (41, 42, 108a, 190, 192) peut être neutralisé manuellement par l'intermédiaire d'un ensemble de neutralisation (20, 40, 193) installé sur la plaque de support (11, 111).

14. Dispositif selon la revendication 1, caractérisé par le fait que la plaque de support (11, 111) est respectivement soulevée ou abaissée en fonction du mouvement du chariot (4, 104), par l'intermédiaire d'une commande forcée (107, 107a, 170, 181, 160, 160a).

15. Dispositif selon les revendications 1 et 14, caractérisé par le fait que le mouvement d'un bras pivotant (107, 107a, 170) est commandé par l'intermédiaire d'une came (160, 160a).

16. Dispositif selon la revendication 1, caractérisé par la présence de moyens de blocage (107a, 170, 160a) qui bloquent le chariot (4, 104) dans sa position extrême extérieure, et sont respectivement activés ou désactivés par le mouvement de levage de la plaque de support (11, 111).

17. Dispositif selon la revendication 1, caractérisé par le fait que l'ouverture pratiquée sur le boîtier récepteur (2, 102) est obturée par un capot (4b, 111a) dans la position encliquetée intérieure.

18. Dispositif selon la revendication 17, caractérisé par le fait que le capot (111a) se trouve sur la plaque de support (11, 111).

19. Dispositif selon les revendications 1 et 17, caractérisé par le fait que le capot (4b) se trouve sur le chariot (4, 104).

20. Dispositif selon la revendication 1, caractérisé par le fait que l'ouverture pratiquée sur le boîtier récepteur (2, 102) est située sur la face extrême (1b) du corps intégré (1, 100) qui est antérieure considérée dans la direction du déplacement du véhicule automobile.

21. Dispositif selon la revendication 1, caractérisé par le fait que la plaque de support (11, 111) est positionnée, dans sa position encliquetée extérieure, avant le corps intégré (1, 100) en considérant dans la direction du déplacement du véhicule automobile.

22. Dispositif selon la revendication 1, caractérisé par le fait qu'un bloc-notes (12, 112) est placé sur la plaque de support (11, 111).

23. Dispositif selon la revendication 22, caractérisé par la présence, sur la plaque de support (11, 111), d'une agrafe (13) au moyen de laquelle le bloc-notes (12, 112) est fermement retenu.

24. Dispositif selon la revendication 23, caractérisé par le fait que l'agrafe (13) présente une position opérante et une position inopérante.

25. Dispositif selon la revendication 22, caractérisé par le fait que des moyens de centrage (111e) sont implantés sur la plaque de support (11, 111), en vue de la délimitation latérale du bloc-notes (12, 112).

26. Dispositif selon la revendication 22, caractérisé par la présence d'un protecteur marginal (14) qui protège, de détériorations, le bord postérieur (12b, 112b) du bloc-notes (12, 112).

27. Dispositif selon la revendication 26, caractérisé par le fait que le protecteur marginal (14) est désactivé dans la position encliquetée extérieure.

28. Dispositif selon la revendication 1, caractérisé par le fait qu'une pièce de retenue (15, 115), affectée à un instrument d'écriture (15a, 150), se trouve sur la plaque de support (11, 111).

29. Dispositif selon les revendications 22 et 28, caractérisé par le fait que la pièce de retenue (15, 115) est installée devant le bloc-notes (12, 112).

30. Dispositif selon la revendication 28, caractérisé par le fait que la pièce de retenue (15, 115) se présente comme une auge configurée en U.

31. Dispositif selon la revendication 30, caractérisé par le fait qu'une surface d'appui rehaussée (115a), sur laquelle l'instrument d'écriture (15a, 150) repose, est prévue dans la région centrale de la pièce de retenue (15, 115).

32. Dispositif selon la revendication 1, caractérisé par le fait qu'un organe d'éclairage (30) est placé sur la plaque de support (11, 111) et éclaire sa surface.

33. Dispositif selon la revendication 1, caractérisé par le fait que la position encliquetée extérieure de la plaque de support (11, 111) est définie par une butée (108a, 111a).

34. Dispositif selon la revendication 33, caractérisé par le fait que la butée (108a, 111a) est réglable.
